**Europäisches Patentamt**

**European Patent Office**

**Office européen des brevets**

(19)

(11) **EP 1 263 158 A1**

(12) **EUROPEAN PATENT APPLICATION**

(43) Date of publication:
**04.12.2002 Bulletin 2002/49**

(51) Int Cl.7: **H04L 1/08**

(21) Application number: **01113439.2**

(22) Date of filing: **01.06.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Huschke, Jörg**<br>  **90491 Nürnberg (DE)**<br>• **Matheus, Kirsten**<br>  **90489 Nürnberg (DE)** |
| (71) Applicant: **TELEFONAKTIEBOLAGET LM ERICSSON (publ)**<br>**126 25 Stockholm (SE)** | (74) Representative: **Mohsler, Gabriele et al**<br>**Ericsson Eurolab Deutschland GmbH,**<br>**Patent Department,**<br>**Neumeyerstrasse 50**<br>**90411 Nürnberg (DE)** |

(54) **Fractional repetition coding**

(57)    1. A method for communicating a plurality of data packets to a receiver in a radio communication system, comprising the steps of transmitting the data packets to the receiver, evaluating the transmission quality, comparing the evaluated transmission quality with at least two thresholds, choosing a transmission mode in dependence of the result of the preceding comparison step is disclosed wherein:

a) a first transmission mode is chosen when the evaluated transmission quality is below a first threshold, whereby in said first transmission mode the data packets are transmitted via a single radio link

b) a second transmission mode is chosen when the transmission quality is above a second threshold whereby in said second transmission mode the data packets are transmitted one time via a first radio link and a second time via an additional radio link

c) a third transmission mode is chosen when the evaluated transmission quality lies in-between said first and said second threshold whereby in said third transmission mode data packets are transmitted one time via a first radio link and a fraction of the data packets is transmitted a second time via an additional radio link.

**Description**

**FIELD OF THE INVENTION**

The present invention relates generally to the field of communication systems for example wireless communications. The invention particularly relates to a method for communicating a plurality of data packets to a receiver in a radio communication system, comprising the steps of transmitting the data packets to the receiver, evaluating the transmission quality, comparing the evaluated transmission quality with at least two thresholds and choosing a transmission mode in dependence of the result of the preceding comparison step. The invention also relates to a transmitter and to a receiver as well for such a communication system.

Such a system is known for example from PCT/EP00/04321. In the known radio communication system a plurality of data packets may be communicated from a transmitter to a receiver where a first radio link is established between the transmitter and the receiver by reserving a series of time slots. The radio link, for example, may be one out of every n time slots, where n is greater than one. A second radio link may further be established between the transmitter and the receiver on a different out of every n time slots such that each of the plurality of data packets is transmitted over the first and second radio links resulting in time diversity such that the receiver receives each of the data packets twice. In a special embodiment the radio links utilize a frequency hopping channel and for each of the plurality of data packets, transmission over the first radio link occurs using a different frequency hop sequence than is used for transmission over the second radio link. By this also frequency diversity is achieved.

The second diversity is added when reception quality problems are detected.

Although the individual performance is increased by this second link it has been observed that in a scenario with concurrent sessions of other transceivers using the same technology the interference situation can worsen. It turned out that the second link introduces new interference to the other transceivers and thus the situation can swing up that all transceivers are at the end using their second radio link permanently.

It is therefore an object of the invention to improve the known method thus that concurrent sessions are not affected as much as it is necessary.

This object is achieved by choosing a transmission mode in dependence of the result of the preceding comparison step according to the following criteria:

a) a first transmission mode is chosen when the evaluated transmission quality is below a first threshold, whereby in said first transmission mode the data packets are transmitted via a single radio link

b) a second transmission mode is chosen when the transmission quality is above a second threshold whereby in said second transmission mode the data packets are transmitted one time via a first radio link and a second time via an additional radio link

c) a third transmission mode is chosen when the evaluated transmission quality lies in-between said first and said second threshold whereby in said third transmission mode data packets are transmitted one time via a first radio link and a fraction of the data packets is transmitted a second time via an additional radio link.

By introducing a third transmission mode, in which the second link is used only part of the time the interference that is caused by the second link is reduced. Thus the number of possible concurrent sessions in the neighborhood is increased. Another effect is that by the part time use of the second channel power consumption is reduced also.

In a preferred embodiment the magnitude of the fraction is adjustable. Preferably the fraction of data packets that is transmitted in the second link is adjusted so that the minimum quality that is required is just met. Thus the interference is reduced to its possible minimum.

**BRIEF DESCRIPTION OF THE DRAWINGS**

The objects and advantages of the invention will be understood by reading the following detailed description in conjunction with the drawings, in which:

FIG 1    is a diagram illustrating exemplary carrier allocation in the 2.45 GHz ISM band;
FIG 2    is a diagram illustrating an exemplary FH radio transceiver configured to operate in the 2.45 GHz ISM band;
FIG 3    is a diagram illustrating an exemplary FH/TDD channel in accordance with the present invention;
FIG 4A    is a diagram illustrating an exemplary physical link in accordance with the present invention;
FIG 4B    is a diagram illustrating signal power of an exemplary time-varying interferer;
FIG 5    is a diagram illustrating an exemplary first link and a part time used second link in accordance with an embodiment of the present invention;
FIG 6    is a diagram illustrating the packet error rate in case a prior art arrangement with a second link that is used full time;

FIG 7      is a diagram illustrating the packet error rate in case the second link is used with a 50% duty cycle;

FIG 8      is a diagram illustrating the impact of the first threshold on the relative number of unsatisfactory links

FIG 9      is a diagram illustrating the distribution of link qualities with a variable duty cycle of the second link

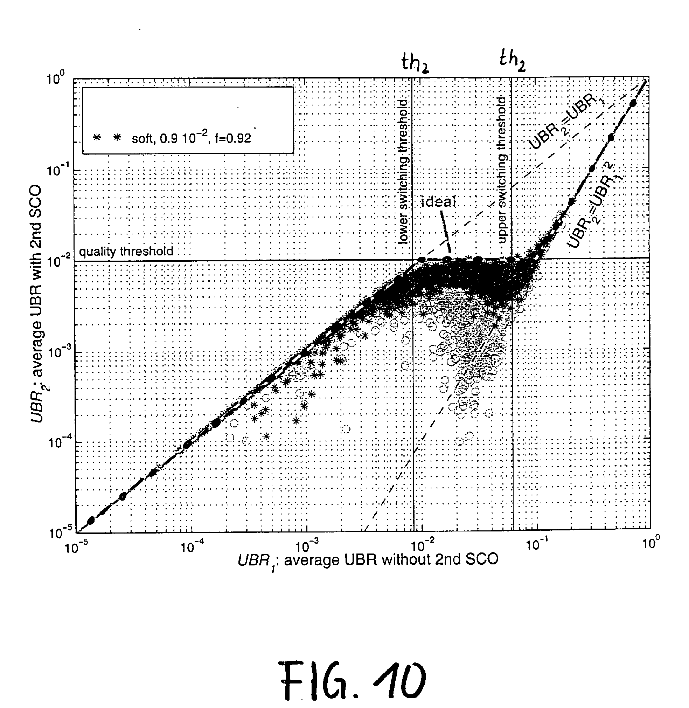

FIG 10     is a diagram illustrating the distribution of link qualities with optimized thresholds and a non linear duty-cycle function

## DETAILED DESCRIPTION

The various features of the invention will now be described with reference to the figures, in which like parts are identified with the same reference characters.

The frequency hopping system of the present invention uses a FH/TDD channel divided into time slots in a radio communications system including a transceiver which alternately transmits and receives. Each time slot makes use of a different frequency. The frequencies are selected according to a pseudo-random hop sequence. Physical links can be established by reservation of time slots spaced at a fixed interval. The information to be transferred from, for example, a sampled voice stream, may be divided into segments and compressed into packets with each packet being sent in a time slot belonging to the physical link. As long as the interference encountered is below a certain first threshold $Th_1$, which herein after is called the lower threshold, this single physical link is sufficient to ensure a desired quality of transmission. In case of heavy interference, e.g. when the interference exceeds a certain second threshold $Th_2$, hereinafter called upper threshold, a second link is established which conveys the same information as the first link, however delayed by a fixed delay. The extra link is requested by the unit that experiences quality problems in its receiver. After a negotiation phase between the units, the additional link is established.

If the level of interference is in-between the lower threshold $Th_1$ and the upper threshold $Th_2$ the extra link is established as well but is used only on a part time basis. For instance only for half of the time, which can mean that only every second time slot of the second link is used for transmitting a packet. In case of moderate interference this will be sufficient to maintain the minimum desired minimum level of transmission quality. On the other hand, as the second link is used only half of the time, the interference that is caused by the second link is also reduced to a half.

The unit receiving the two links receives the same information packet twice or in case of the part time extra link only some of the packets twice. But the corresponding packets will be received at different frequencies and at different times. As a result, both frequency diversity and time diversity are obtained which provides immunity against time-varying, band-limited interferers. The combining of the two packets can be done in different ways. Also if only a part time second link is used the second link will result in a reduction of capacity of the system and should only be used for as long as the interferer is active. When the recipient experiences a good quality on both the links, one link can be released, or at least can be reduced from a full time link to a part time link. Note that the extra link can be established for each direction separately: an extra link is set up only for the direction where the receiver experiences interference problems. If in a duplex link, both receivers are affected, an extra link in both directions may be set up.

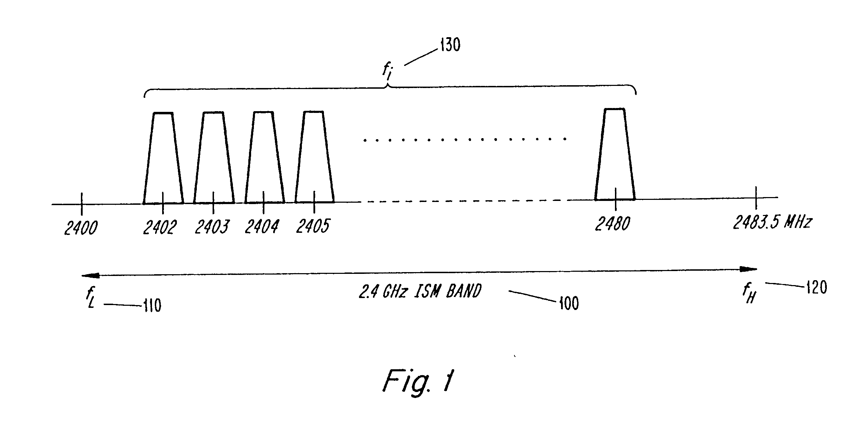

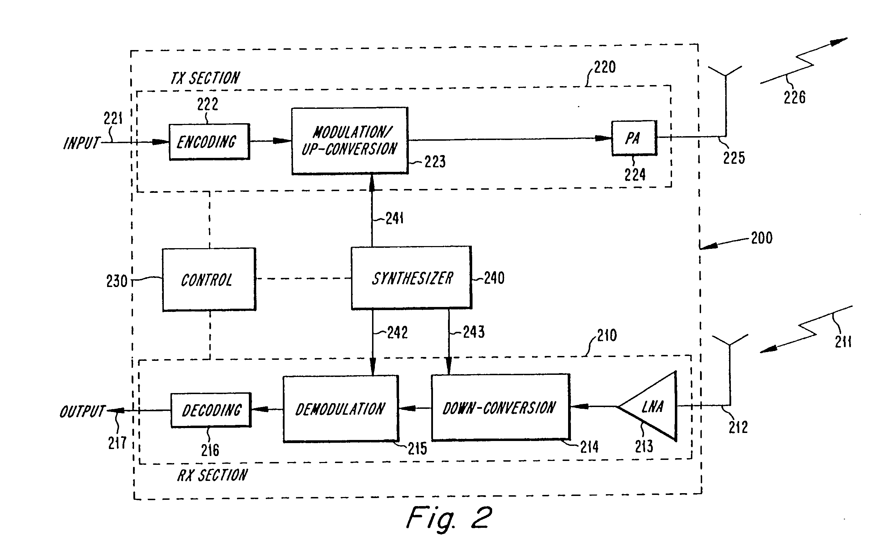

In FIG 1 a frequency hoping band 100 is illustrated, which represents the ISM band at 2.45 GHz. This band ranges from $f_L$ at around 2400 MHZ to $f_H$ at around 2483.5 MHZ and may be divided into 79 hop carriers $f_i$ 130 centered at frequencies spaced 1 MHZ apart from each other. A general diagram for a radio transceiver suitable for use in a FH radio unit in accordance with the present invention is shown in FIG 2. Transceiver 200 includes transmit section 210 and receive section 220 which may communicate with corresponding sections of another transceiver (not shown) using frequency hopping from one carrier to another carrier according to a pseudo-random hop pattern shared by all connected radio units. As long as all radio units are hop synchronized, that is hop according to the identical hop pattern employed, for example, in transceiver transmit and receive sections 210 and 220, they will simultaneously use the same carrier, and thus stay in contact. An input signal 221 may be encoded by an encoder 222 in transmitter section 220 and passed to modulation / up-conversion block 223 where further modulation, power spreading in accordance with FH methods, may be applied and the signal may be up converted to transmission frequency. The modulated and up converted signal may then be passed to power amplifier PA 224 for output through transmit antenna 225 as transmit signal 226 on the air interface. Receive signal 211 from a transmitter not shown may be received in receiver section 210 from the air interface through receive antenna 212 whereupon it is amplified in Low Noise Amplifier (LNA) 213. The modulated receive signal 211 is passed to down-converter 214 where it is converted back to base band and demodulated in demodulator 215. Both down-converter 214 and demodulator 215 are synchronized using frequency synthesizer 240 under the control of control unit 230. Synchronization may be maintained between transmitter section 220 and receiver section 210 of transceiver 200 and the corresponding transmit and receive sections of a transceiver not shown to accomplish frequency hopping.

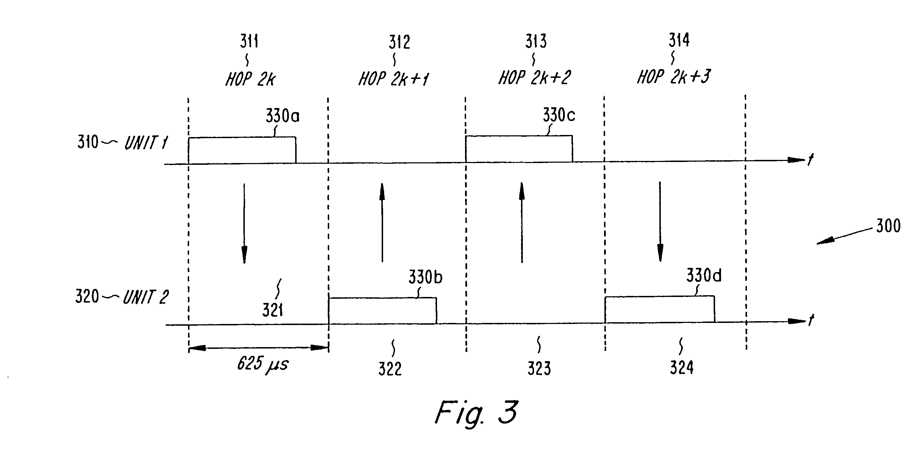

An FH system for ad-hoc connectivity between portable computing and communication devices like laptops, phones, headsets, and the like including a new air interface, is illustrated in FIG 3. FH channels for each transmit/receive direction between two radio units are shown as unit 1 channel 310 and unit 2 channel 320. Channels 310 and 320 may be divided into time slots 321 -324 where a single packet in a digital format may be sent or received. For example, in time slot 321, unit 1 channel 310 may transmit packet 330a to unit 2 channel 320. Packet 330a may be transmitted in time slot 321 at a first hop frequency 311. For time slots 322-324 different hop frequencies 312-314 are used. Hopping may proceed according to a hopping sequence which must be synchronized between unit 1 and unit 2. In order to obtain two-way communication, and as is further shown in FIG 3, unit 1 and unit 2 may alternatively transmit and receive; that is, unit 2 transmits, for example, on even numbered time slots 312 and 314 and receives on odd-numbered time slots 311 and 313, whereas unit 1 operates in exactly the opposite way as indicated. The result is two-way FH/TDD channel 300 where both frequency hopping (FH) and time division duplexing (TDD) are applied.

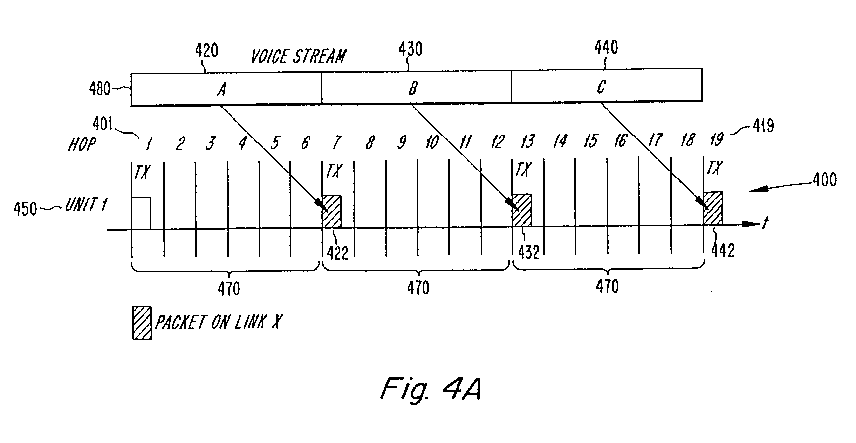

On such FH/TDD channels, circuit-switched links may be established to transmit synchronous, real-time information like voice (or video). However such data require a high degree of accuracy without sacrificing the real-time quality. Retransmission (ARQ) schemes that first test whether received data is correct and then trigger a retransmission of data upon errors, are not attractive because of the variable delay which may be introduced. Another issue with ARQ is that it needs extra signaling on the lower layers. A circuit-switched connection over FH/TDD channel 300 as illustrated in FIG 3 can be established by reserving slots spaced at fixed intervals as illustrated in FIG 4A. During a communication, information stream 480, which may be, for example, a voice stream, may be generated by sampling at a typical rate and generating data at a corresponding rate of 64 kbp/s, 56 kbp/s, or the like as is commonly used in the art. As information stream 480 is sampled, it is divided into segments, with each segment A 420, segment B 430 and segment C 440 being compressed into packets 422,432, and 442 respectively and subsequently transmitted on time slots 401-419 at a rate of, for example, 1Mbps. It can be seen that packets 422, 432, and 442 may further be placed in time slots 407,413, and 419 respectively for transmission at intervals spaced apart by a predetermined number of time slots, for example, six time slots as shown. It should be noted that timeslots 401 through 419 may further be associated with FH hop intervals and may thus represent different hop frequencies. Reception of packets 422, 432, and 442 by a receiver unit may be accomplished by becoming FH synchronized according to a synchronization protocol that is established during the initial connection between communicating units.

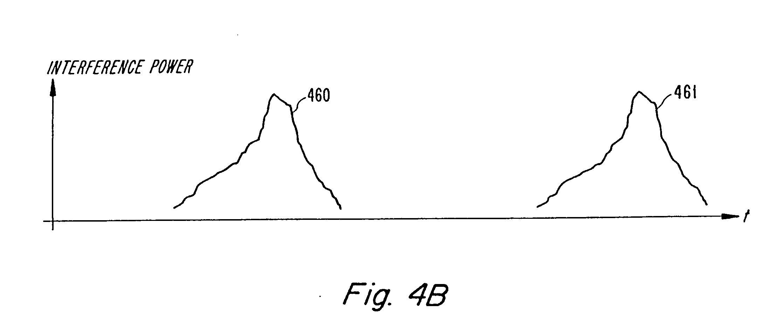

The selection of interval 470, chosen to be, for example, an offset of six time slots in the exemplary embodiment illustrated in FIG 4A, depends on the available capacity, the required capacity, and permitted delay for link 400 and may further be dependent to some extent on the nature of the underlying data in segments A 420, B 430, and C 440, (e.g., real-time data vs. NRT data, and the like). Information stream 480 on link 400, shown in the exemplary embodiment as a voice stream may be separated into segments A 420, B 430, and C 440 as described. Segment size may be such that each of segments A 420, B 430, and C 440 may compressed into packets 422, 432, and 442 respectively and fit into respective time slots 401-419 offset from each other by interval 470. When a time-varying interference source transmits signals characterized by exemplary energy curves 460 and 461, as illustrated in FIG 4B, coincident with the frequency band and time slots occupied by data packets 422, 432, and 442 as illustrated in FIG 4A, it may be noted that, for example, the transmission of packet 422 containing segment A 420 and packet 442 containing segment C 440 may be disturbed thus causing noticeable undesirable effects to the user (e.g. noise, or clicks), particularly with voice data.

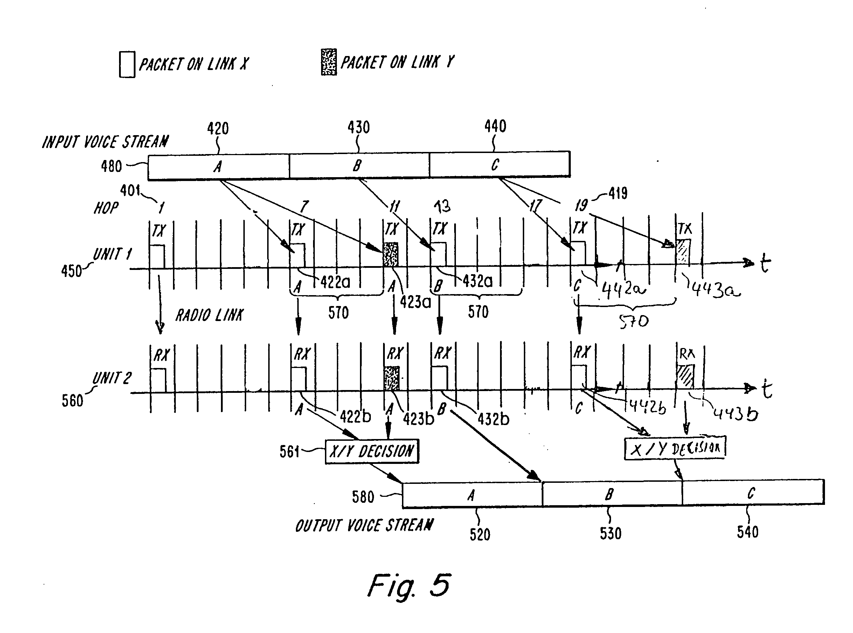

In accordance with the present invention as illustrated in FIG 5, when interference energy emanating from a source characterized by exemplary energy curves 460 and 461 causes errors in data packets 422, 432, and 442, a second link may be established and may use full time to carry all of the same data from packets 422, 432, and 442 or depending on the interference situation the second link is established but used only part time to carry a fraction of the same data from packets 422, 432, and 442. FIG 5 depicts the embodiment in that the second link is used only for 50% of its time. Accordingly, segment A 420, for example, is sent from unit 1 450 on time slot 407 and on time slot 411 as packets 422a and 423a respectively. Unit 2 560 may combine, for example, corresponding packets 422b and 423b at combination block 561, which may use one of several combination or discard decision strategies (e.g. based on quality measure and the like) enumerated in greater detail herein below. In contrast hereto segment B 430, for example, is sent from unit 1 450 on time slot 413 only as packet 432a. Unit 2 thus can process only the packet B 432b. As a second packet on the second link has been cut out the next packet of segment C 440 is now again transmitted twice as packets 4

Considering that, for example, either packet A 422b or A 423b may be corrupted, either packet may be considered redundant as to the other. Packet redundancy based on establishing a second link therefore may be used to reconstruct receive voice stream 580 by decompressing at unit 2 560, for example, segment A 520, segment B 530, and segment C 540 representing segment A 420, segment B 430, and segment C 440 respectively. Double sent data packets such as 422b and 423b, or 442b and 443b received at unit 2 560 from unit 1 450 may be combined in anyone of a number of ways. For example, either one of data packets 422b or 423b representing segment A 420 may be discarded based on the failure of either one, or perhaps both, of the data packets to meet a quality measure. Exemplary measures may include RSSI, an interference measure based soft information may include information accessible to a receiver which aids in detection and recovery of data from each link, such as CRC polynomials, coding related information, and the like.

For reasons of giving a simple example the above embodiment has been described of using an established link with a fixed part time usage rate of 50%. Although this already helps to improve the interference situation caused by the second link itself the preferred embodiment provides a variable usage of the second link. Thus the second link can be adopted to the extend that is really needed to maintain a certain reception quality. In the preferred embodiment the receiver calculates, based on an averaged packet error rate the usage rate p of the second link. The packet error rate is averaged over a certain number n of precedingly received packets. The number n should not be too small in order not to cause too much overhead for requesting a new usage rate p. On the other hand the number of averaged packets should not be too large to avoid bad adoption to a change of the interference situation. For voice transmission the time interval has been chosen to be ca. 1,2 s which corresponds in the above example to about three hundred packets. A person skilled in the art will readily appreciate that for different situations, e.g. transfer of data other than voice data other average times may be appropriate.

In the following the usage rate is based on the so called unsatisfied burst rate UBR. In case a burst is identical to a packet and all bits of a burst or a packet respectively have the same importance unsatisfied burst rate and packet error rate directly correspond. In case a packet carries bits which have a different impact on the perceivable quality if they are destroyed, e.g. in voice signals or pictures, the impact of a particular bit error therefore also depends on its meaning. Therefore the packet error rate as such will not be a sufficient measure for the perceivable quality. The expression unsatisfied burst rate UBR therefor stands for a weighted error rate that takes into account the impact on quality of particular errors.

In the following a unsatisfied burst rate UBR of 1% for speech encoded signals is considered to be sufficient to guarantee a good speech quality. This UBR therefore is called in the following the minimum quality rate MQR. The person skilled in the art will readily appreciate that the minimum quality rate MQR is only an example as this quality threshold depends on various factors, like on the speech encoding method that has been chosen, the current system implementation, the modulation mode, just to list some. In the following embodiments the thresholds th1, th2 are a function of the minimum quality rate MQR. As long as the unsatisfied burst rate evaluated by the receiver is below the lower threshold only one radio link is used. If the evaluated unsatisfied burst rate is above the upper threshold th2 the second link is used permanently. Based on the assumption that first and second link will experience equal probabilities of being disturbed it can be assumed that the achievable quality of two links is the square of the unsatisfied burst rate of a single link. Therefore it is considered reasonable to set the upper threshold th2 to the root of the lower threshold th1.

$$(1) \qquad th_2 = \sqrt{th_1}$$

In between the lower and the upper threshold $th_1$, $th_2$ the requested usage p of the second link is calculated on the minimum quality rate MRQ

$$(2) \qquad p(n)= (h(n)-th1)/(h(n)(1-h(n)))$$

wherein h(n) is the actual averaged unsatisfied burst rate UBR.

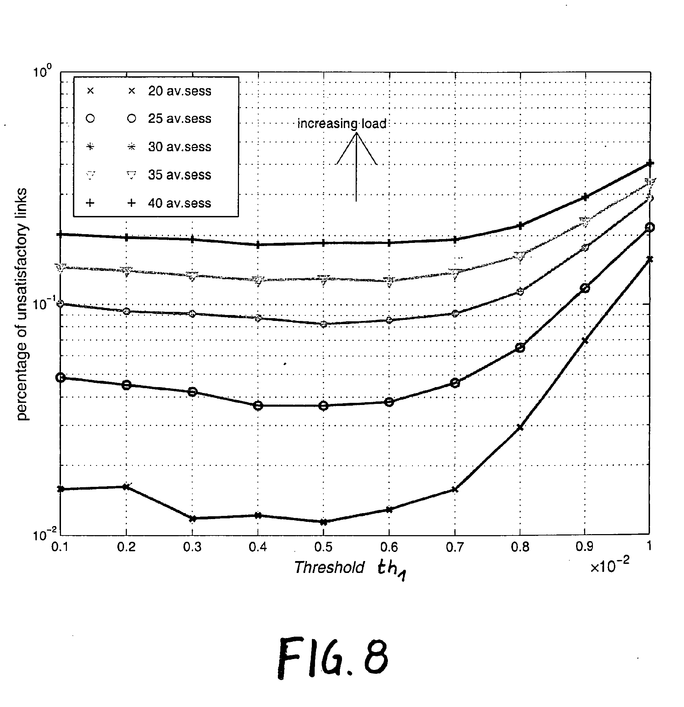

Using this values simulations have been made to find an optimized value for the lower threshold th1. In a scenario where a number n of transceiver pairs are placed in a room with the dimensions 10 m * 20 m at an averaged distant of 2 m the percentage of unsatisfactory links has been calculated. As can be seen from FIG. 8 the percentage of unsatisfactory links increases with the number of concurrent active transceiver pairs. But for each constant number of concurrent active transceiver pairs a minimum for the percentage of unsatisfactory links can be found if the lower threshold is chosen at around 0.5 of the minimum quality rate MQR.

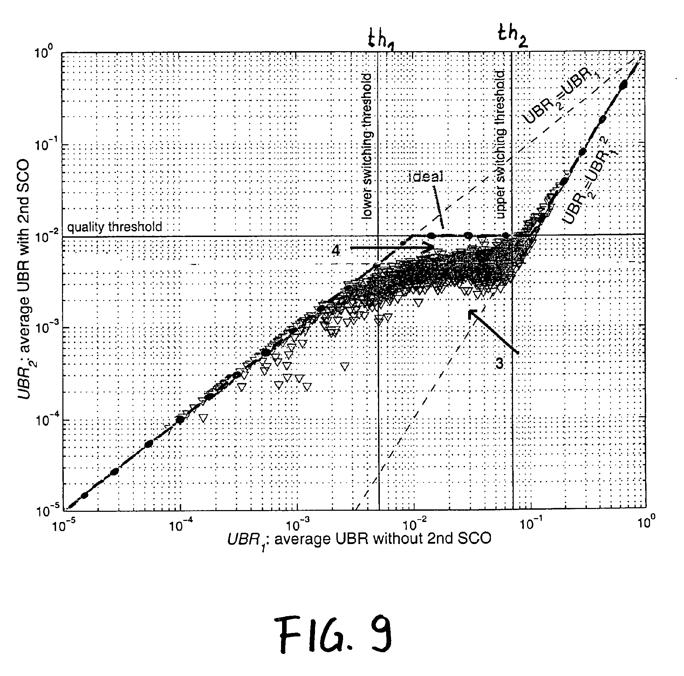

With this figures it has been simulated what unsatisfied burst rate UBR could be achieved in a scenario with twenty-five concurrent sessions. The results, depicted in FIG 9 show, that the achieved UBRs coarsely follow the ideal target line. However, as the simulation takes into account that the interference situation varies the results in statistical terms are still providing some unused margin. To adopt the results of real world to the ideal line the best mode found to introduce a correction factor f for adopting the probability p to that situation:

$$p'(n) = \begin{cases} 0 & \text{for} & h(n) \leq Threshold \\ \frac{h(n)-Threshold}{f \cdot h(n)(1-h(n))} & \text{for } Threshold < h(n) < \frac{-(1-f)+\sqrt{Threshold+(1-f)^2}}{2f} \\ 1 & \text{for} & h(n) \geq \frac{-(1-f)+\sqrt{Threshold+(1-f)^2}}{2f} \end{cases} \quad .$$

For this case the correction factor f and the threshold th1 had to be optimized. It has been found that the best known results are achieved with f = 0.92 and th1 = 0.9 of the targeted minimum quality rate. The results of a simulation with this values are shown in picture 10. With this optimized function and thresholds the resulting UBRs are following the ideal target line very closely.

To compare the performance of the new method a capacity of 5% unsatisfactory links had been assumed. The prior art method which uses a permanent second link, as long as it is needed permitted around 24 Erlangs. With the proposed method in its best mode the performance is increased to 27.5 Erlangs. To give an idea what this figure means the number in case ARQ would have been admitted was found to be 44 Erlangs under the same conditions.

As previously described, an additional link may be established if a receiving unit on either end of a transmission experiences a quality loss. In a further embodiment in accordance with the present invention, interference may be required to be experienced for a large number of packets before an additional link is established. It is further to be noted that the establishing of an additional link should not be made on a per-packet basis. Further, retransmission is not decided instantaneously per packet. Accordingly, since the present invention is not contemplated to adapt instantaneously to transient interference energy levels, an interference source must be active and causing packet degradation for a predetermined period of time or number of packets before an additional link is established. After the interference is experienced for the predetermined time period, unit 1450 and an associated transceiver may negotiate to establish a second link for full time use or part time use, respectively. Likewise, when packet quality on both links becomes acceptable for a predetermined time period or number of packets, the additional link may be released or the usage of a part time link may be reduced to a lower rate. It should be noted that the method and apparatus of the present invention provides an advantage of using existing air protocols as distinguished from prior art retransmission or time diversity techniques which do not.

It is contemplated that the teachings of the present invention in adding an additional link between transmitter and receiver to provide time diversity can be applied in any slot-based air interface standard. Therefore, the teachings of the present invention are not limited to the exemplary air interface described herein, but may also be applied in other standard TDMA systems like GSM or D-AMPS. Moreover, the present invention is not limited to one additional link. If required, a third, and fourth additional link and beyond may be introduced also for part time use, for as long as the interference source is active. The number of additional links may be limited by capacity and delay requirements and system resources. If a significant number of additional links are contemplated, it may further be required to add more buffering and processing capability in the receiver.

The invention has been described with reference to a particular embodiment. However, it will be readily apparent to those skilled in the art that it is possible to embody the invention in specific forms other than those of the preferred embodiment described above. This may be done without departing from the spirit of the invention. The preferred embodiment is merely illustrative and should not be considered restrictive in any way. The scope of the invention is given by the appended claims, rather than the preceding description, and all variations and equivalents which fall within the range of the claims are intended to be embraced therein.

1. It is possible that two slaves have SCO-speech connections with one master simultaneously. As has been mentioned in [1], as long as *not* a continuous second SCO-link is required it is possible that the two units share the possibility of a second SCO-link in the remaining third time slot (see Figure 11). The sharing could be done on a regular basis, depending on the link qualities, on a random distribution or on a combination of these things.

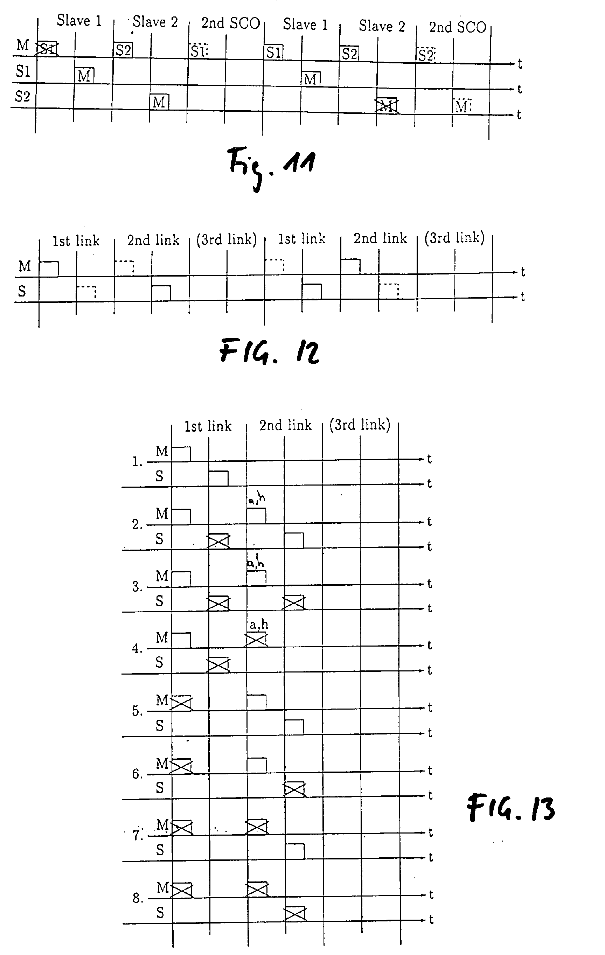

2. Next to the frequency hopping a "time hopping" can be included. Like for the soft switch when two links are available but not necessarily used for transmission, two links are reserved for this method for one slave. The idea is to transmit each packet only once, but according to a drawn random value sometimes on the first link, sometimes on the second (see Figure 12). This takes the edge of the case where a close by interferer transmits on (almost) the same time grid.

3. This presents a possibility to implement an ARQ-like method (which has performed best) without needing an ARQ bit. The basic idea is that the slave only transmits on its first link when it has received an acceptable packet from the master (if not, then the slave transmits on the second link) and that the master retransmits a packet when it has not received anything acceptable from the slave, requesting the slave to transmit (again) on the second link by retransmitting its own packet. In detail this looks as shown in Figure 13[2]

In the 1st case both downlink and uplink bursts have been received correctly. Nothing further happens. In the 2nd, 3rd and 4th case the (first) uplink burst is unsatisfactory. The master then sends a retransmission to indicate it requires a new uplink burst. If the slave receives header ("h") and access code ("a") of this burst it retransmits on its second link (in the 2nd case the retransmission arrives; in the 3rd case it does not), else (case 4) nothing more

[1] This assumes that up- and downlink are controlled seperately.
[2] Like with the soft switch method and ideas 1 and 2 the units have to prepare to receive (i.e. listen) in every slot assigned to them.

happens. In the 5th, 6th, 7th and 8th case the (first) downlink burst is lost or unsatisfactory. The slave does not transmit on its first link to make sure the master retransmits (initially to request a second burst from the slave). Independent from whether this retransmitted downlink burst has been received or not the slave will transmit on the second link. In unlucky cases the retransmission of the downlink will be lost also (case 7) and in very unlucky cases additionally the uplink burst gets lost (case 8).

Using this method there is a slight imbalance, meaning that the downlink burst will have a better performance than the uplink.

This method presents a good compromise between requesting a second SCO-burst only when needed (i.e. causing very little interference and needing little additional battery power) and not needing a signalling bit. The capacity is expected to be noteworthingly larger than for the threshold-methods (and somewhat smaller than for the ARQ-method).

## Claims

1. A method for communicating a plurality of data packets to a receiver in a radio communication system, comprising the steps of:

   - transmitting the data packets to the receiver
   - evaluating the transmission quality
   - comparing the evaluated transmission quality with at least two thresholds
   - choosing a transmission mode in dependence of the result of the preceding comparison step according to the following criteria:

      a) a first transmission mode is chosen when the evaluated transmission quality is below a first threshold, whereby in said first transmission mode the data packets are transmitted via a single radio link

      b) a second transmission mode is chosen when the transmission quality is above a second threshold whereby in said second transmission mode the data packets are transmitted one time via a first radio link and a second time via an additional radio link

      c) a third transmission mode is chosen when the evaluated transmission quality lies in-between said first and said second threshold whereby in said third transmission mode data packets are transmitted one time via a first radio link and a fraction of the data packets is transmitted a second time via an additional radio link.

2. Method according to claim 1,
   **characterized in that**,
   the magnitude of the fraction is adjustable.

3. Method according to claim 1 or 2,
   **characterized in that**,
   the transmission quality is measured by means of a packet error rate (BUR).

4. Method according to claim 1 - 3,
   **characterized in that**,
   the lower threshold $th_1$ is chosen below the targeted qualtiy level.

5. Method according to claim 1 - 4,
   **characterized in that**,
   the transmission system is Time Divison system with time slots in which the packets are transmitted and that for the second radio link time slots are used that differ from the time slots that are used for the first radio link.

6. Method according to claim 5,
   **characterized in that**,
   the time slots used for the first radio link are equidistant and that the time slots used for the second radio links have a fixed distant to the corresponding time slots of the first radio link.

7. Method according to claims 1 - 6,
   **characterized in that**,
   the radio links use a frequency hopping scheme (FH).

8. A transmitter for a communication system according to claims 1 -7.

9. A receiver for a communication system according to claims 1 - 7.

10. A method for communicating a plurality of data packets to a receiver in a radio communication system, comprising the steps of:

   - transmitting the data packets to the receiver
   - deciding if a packet has been received with a certain quality
   - transmitting a packet on a first radio link if the quality of a received packet was sufficient
   - transmitting a packet on a second radio link if the quality of a received packet was insufficient.

Fig. 1

EP 1 263 158 A1

*Fig. 2*

EP 1 263 158 A1

*Fig. 3*

Fig. 4A

*Fig. 4B*

EP 1 263 158 A1

Fig. 5

EP 1 263 158 A1

FIG. 8

FIG. 9

FIG. 10

**Fig. 11**

**FIG. 12**

**FIG. 13**

## PARTIAL EUROPEAN SEARCH REPORT

Application Number

which under Rule 45 of the European Patent Convention shall be considered, for the purposes of subsequent proceedings, as the European search report

EP 01 11 3439

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 612 192 A (TOSHIBA) 24 August 1994 (1994-08-24) * column 2, line 33 - line 56 * * column 7, line 48 - line 58 * * column 8, line 6 - line 9 * * column 9, line 19 - line 31 * * column 13, line 15 - line 28 * | 1-9 | H04L1/08 |
| X | WO 99 05798 A (PHILIPS) 4 February 1999 (1999-02-04) * page 2, line 26 - line 28 * | 1-9 | |
| X,D | WO 00 70811 A (ERICSSON) 23 November 2000 (2000-11-23) * abstract * | 1-9 | |
| X | EP 0 212 667 A (NEC) 4 March 1987 (1987-03-04) * page 1, line 18 - line 23 * | 1-9 | |
| X | EP 0 239 453 A (CIMSA SINTRA) 30 September 1987 (1987-09-30) * page 7, line 28 - line 45 * | 1-9 | TECHNICAL FIELDS SEARCHED (Int.Cl.7) H04L |

-/--

### INCOMPLETE SEARCH

The Search Division considers that the present application, or one or more of its claims, does/do not comply with the EPC to such an extent that a meaningful search into the state of the art cannot be carried out, or can only be carried out partially, for those claims.

Claims searched completely :

Claims searched incompletely :

Claims not searched :

Reason for the limitation of the search:

see sheet C

| Place of search | Date of completion of the search | Examiner |
|---|---|---|
| THE HAGUE | 25 October 2001 | Scriven, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

European Patent
Office

INCOMPLETE SEARCH
SHEET C

Application Number

EP 01 11 3439

Claim(s) not searched:
        8-10

Reason for the limitation of the search:

Claims 8 and 9 do not define the invention as set out in the description,
which requires the the cooperation of both transmitter and receiver.  The
invention as described cannot be embodied in a transmitter alone, or in a
receiver alone.  Consequently, these claims lack support within the
meaning of Article 84 EPC.  Furthermore, insofar as they do define
inventions, these are not disclosed, contrary to Article 83 EPC.

Claim 10 defines a method in which packets are transmitted over one link,
if the quality is goo, but over a different link, if the quality is bad.
This is not supported by the description, according to which, each packet
is always transmitted over the first link.

Consequently, the search has been restricted to those claims which are
fully supported by the description, namely claims 1-7.

**European Patent Office**

**PARTIAL EUROPEAN SEARCH REPORT**

Application Number

EP 01 11 3439

## DOCUMENTS CONSIDERED TO BE RELEVANT

| Category | Citation of document with indication, where appropriate, of relevant passages | Relevant to claim |
|---|---|---|
| A | EP 0 977 372 A (ERICSSON) 2 February 2000 (2000-02-02) * abstract * | 1-9 |
| A | WO 00 76113 A (MICROSOFT) 14 December 2000 (2000-12-14) * page 5, line 1 - line 8 * * page 5, line 12 - line 15 * * page 6, line 25 - line 31 * | 1 |
| A | GB 2 326 308 A (NOKIA) 16 December 1998 (1998-12-16) * page 4, line 3 - line 5 * * page 7, line 15 - line 17 * * page 9, line 11 - line 16 * | 1 |
| A | US 5 809 013 A (KACKMAN) 15 September 1998 (1998-09-15) * column 2, line 56 - line 61 * * column 3, line 18 - line 27 * | 1 |

**CLASSIFICATION OF THE APPLICATION (Int.Cl.7)**

**TECHNICAL FIELDS SEARCHED (Int.Cl.7)**

EPO FORM 1503 03.82 (P04C10)

21

## ANNEX TO THE EUROPEAN SEARCH REPORT
## ON EUROPEAN PATENT APPLICATION NO.

EP 01 11 3439

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2001

| Patent document cited in search report | | Publication date | Patent family member(s) | | Publication date |
|---|---|---|---|---|---|
| EP 0612192 | A | 24-08-1994 | JP | 3187190 B2 | 11-07-2001 |
| | | | JP | 6244791 A | 02-09-1994 |
| | | | AU | 662674 B2 | 07-09-1995 |
| | | | AU | 5522294 A | 01-09-1994 |
| | | | CA | 2115901 A1 | 19-08-1994 |
| | | | CN | 1095207 A ,B | 16-11-1994 |
| | | | EP | 0612192 A1 | 24-08-1994 |
| | | | FI | 940780 A | 19-08-1994 |
| | | | KR | 153030 B1 | 16-11-1998 |
| | | | US | 5436906 A | 25-07-1995 |
| WO 9905798 | A | 04-02-1999 | EP | 0941585 A1 | 15-09-1999 |
| | | | WO | 9905798 A1 | 04-02-1999 |
| | | | JP | 2001501425 T | 30-01-2001 |
| WO 0070811 | A | 23-11-2000 | AU | 4565500 A | 05-12-2000 |
| | | | WO | 0070811 A1 | 23-11-2000 |
| EP 0212667 | A | 04-03-1987 | JP | 62048827 A | 03-03-1987 |
| | | | JP | 1883668 C | 10-11-1994 |
| | | | JP | 6009350 B | 02-02-1994 |
| | | | JP | 62105544 A | 16-05-1987 |
| | | | AU | 582332 B2 | 16-03-1989 |
| | | | AU | 6183686 A | 05-03-1987 |
| | | | CA | 1268821 A1 | 08-05-1990 |
| | | | DE | 3689453 D1 | 10-02-1994 |
| | | | DE | 3689453 T2 | 05-05-1994 |
| | | | EP | 0212667 A2 | 04-03-1987 |
| | | | US | 4766599 A | 23-08-1988 |
| EP 0239453 | A | 30-09-1987 | FR | 2595522 A1 | 11-09-1987 |
| | | | AT | 59254 T | 15-01-1991 |
| | | | BR | 8701010 A | 29-12-1987 |
| | | | CA | 1264875 A1 | 23-01-1990 |
| | | | DE | 3766732 D1 | 31-01-1991 |
| | | | EP | 0239453 A1 | 30-09-1987 |
| | | | GR | 3001549 T3 | 23-11-1992 |
| | | | IN | 170913 A1 | 13-06-1992 |
| | | | JP | 62277827 A | 02-12-1987 |
| | | | SG | 12792 G | 16-04-1992 |
| | | | US | 4803685 A | 07-02-1989 |
| EP 0977372 | A | 02-02-2000 | US | 5663957 A | 02-09-1997 |
| | | | EP | 0977372 A2 | 02-02-2000 |
| | | | EP | 0984568 A2 | 08-03-2000 |
| | | | EP | 0977373 A2 | 02-02-2000 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                    EP 01 11 3439

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2001

| Patent document cited in search report | | Publication date | Patent family member(s) | | Publication date |
|---|---|---|---|---|---|
| EP 0977372 | A | | EP | 0977374 A2 | 02-02-2000 |
| | | | EP | 0977375 A2 | 02-02-2000 |
| | | | AU | 714923 B2 | 13-01-2000 |
| | | | AU | 6636196 A | 10-02-1997 |
| | | | BR | 9609522 A | 29-06-1999 |
| | | | CN | 1195434 A | 07-10-1998 |
| | | | DE | 69610633 D1 | 16-11-2000 |
| | | | DE | 69610633 T2 | 10-05-2001 |
| | | | EP | 0838106 A2 | 29-04-1998 |
| | | | JP | 11509065 T | 03-08-1999 |
| | | | WO | 9703501 A2 | 30-01-1997 |
| | | | US | 5757789 A | 26-05-1998 |
| | | | US | 5729538 A | 17-03-1998 |
| | | | US | 5757787 A | 26-05-1998 |
| | | | US | 5812539 A | 22-09-1998 |
| | | | US | 6084865 A | 04-07-2000 |
| WO 0076113 | A | 14-12-2000 | AU | 5038600 A | 28-12-2000 |
| | | | WO | 0076113 A1 | 14-12-2000 |
| GB 2326308 | A | 16-12-1998 | AU | 7225398 A | 21-12-1998 |
| | | | BR | 9808713 A | 11-07-2000 |
| | | | CN | 1259244 T | 05-07-2000 |
| | | | EP | 0992126 A1 | 12-04-2000 |
| | | | WO | 9856122 A1 | 10-12-1998 |
| US 5809013 | A | 15-09-1998 | NONE | | |

EPO FORM P0459

For more details about this annex : see Official Journal of the European Patent Office, No. 12/82